# EUROPEAN PATENT APPLICATION

(11) **EP 1 560 101 A1**
(43) Date of publication of application: **03.08.2005**
(21) Application number: 04290206.4
(22) Date of filing: 27.01.2004
(51) Int. Cl.: G06F 1/16, G06F 3/02, G06F 3/023

(54) **Display apparatus, computers and related methods**

(71) Applicant: Hewlett-Packard Development Company, L.P., Houston, Texas 77070 (US)
(72) Inventor: Hamon, Olivier, 38920 Crolles (FR)
(74) Representative: Lloyd, Richard Graham

(57) **Abstract**

A display apparatus for a data-processing device, the display apparatus, in use, having a viewable area, a detector to detect the presence of a device that obscures at least part of the viewable area and a display control element to modify the viewable area when the presence of such a device is detected.

## Description

### Field of the Invention

This invention relates, in general terms, to the fields of display apparatus for data-processing devices such as computers, computers themselves and to methods related to such devices.

More particularly, but by no means exclusively, the invention is concerned with display apparatus and the control or management of power consumption relating to portable computers, and to associated methods.

### Background to the Invention and Summary of the Prior Art

In recent years, the field of computer design has evolved substantially, with the functionality and operating efficiency of both desktop and portable computers having increased greatly, in a variety of ways. In both the desktop and portable environments, processing speeds, data storage capabilities and multi-media functionalities have given rise to powerful and versatile machines, for both personal and business use, although computer designers are still faced with a number of basic challenges, such as minimising power consumption and maximising operating efficiency. In the portable world, especially, size and weight reduction, together with ergonomic considerations are also an important factor, with these requirements sometimes giving rise to considerable difficulties, bearing in mind the necessity of providing an on-board power supply, usually in the form of one or more batteries.

The present invention seeks to address some, at least, of these challenges.

### Summary of the Invention

In accordance with a first aspect of the present invention, there is provided display apparatus for a data-processing device, the display apparatus, in use, having a viewable area, a detector to detect the presence of a device that obscures at least part of the viewable area and a display control element to modify the viewable area when the presence of such a device is detected.

It should be understood, in this regard, that the term "viewable area" is intended to refer to that part of the display screen that is operative to convey output information to a user, such as may be produced by applications such as spreadsheets, word processors, browsers, e-mail facilities, together with directory structures, multi-media outputs, and document viewers such as (for example) Adobe's "Acrobat" ⁽™⁾ package.

It will also be understood that the display control element may be provided in addition to a conventional display driver (sometimes known as a display controller) which is principally responsible for image generation within the data-processing device. In other words, the display control element provides additional functionality over and above that which may be provided by such a display driver/controller, although it need not necessarily be provided as a discrete hardware or software component.

The display control element may modify the viewable area to mitigate the effect of the obscuration.

Alternatively, the display control element may modify the viewable area to compensate for the obscuration.

The display control element may select an image orientation that is appropriate for use of the detected device.

The detector may be operative to detect the presence of a variety of different devices, such as output devices in the form of audio speakers and Braille character generators and add-on data storage devices such as floppy and CD drives, but preferably is operative to detect the presence of input devices such as keyboards, touch pads, hand writing recognition devices and the like.

In this way, a user may make use of the input device, seeing the results of the input information in the modified viewable area, with the image being displayed in a manner that is convenient for the user, in that no user orientation of the display apparatus is required.

The display apparatus may have a connector for attachment of the device such that it overlies part of the screen.

The connector may allow data, input from the device, to be displayed in the modified viewable area.

The connector may act in a physical sense, to assist in locating the device at an appropriate position on the display apparatus and may also act electrically, to allow data to be passed to or from the device for display (in the case of an input device) in the modified viewable area.

The display apparatus may be of the flat-panel type, with the display control element being operative to blank the part of the screen that is obscured by the device.

The display apparatus may have pixels of the self-emitting type, with the display control element being operative to dim or turn off those pixels that are obscured by the device.

Alternatively, the display apparatus may be of the back-lit type, with the display control element being operative to dim or turn off the back-lighting in those parts of the screen that are obscured by the device.

In this way, the power consumption of the display apparatus may be reduced, when the device obscures part of the screen, by reducing or ceasing the supply of power to those parts of the screen that have become obscured, and which the user is thus less likely (if at all) to need to see.

The display apparatus may form part of a portable computer which, when the device is not in use, may function as a slate-style tablet computer.

The display apparatus may have a storage facility for the device, when the device is not in use. The device may be removable from the display apparatus or may be connected thereto, perhaps by way of a hinge, pivot or swivel arrangement.

The portable computer and device may each be provided with a wireless connection. In this way, the device may be used remotely from the display apparatus, with the display apparatus thus acting in the manner of a stand-alone monitor.

The device may be a computer keyboard or may include a software representation of a computer keyboard.

In accordance with a second aspect of the present invention, there is provided a portable computer having a display and a detachable device, the viewable area of the display being modified by a display control element when the device is attached the computer in a manner that obscures at least part of the unmodified viewable area.

The device may be an input device such as a keyboard, with the viewable area conveniently being switched from landscape to portrait mode when the keyboard is so attached.

The keyboard may be located, when not in use, in a storage bay of the computer's housing.

In accordance with a third aspect of the present invention, there is provided a method of reducing the power consumption of a computer display, comprising modifying the viewable area of the display when a user's view of at least part of the display is obscured.

In accordance with a fourth aspect of the present invention, there is provided a tablet computer having a first mode of operation in which substantially all of the screen area may be used for information display, and a second mode of operation in which a detachable keyboard overlies a sub-area of the screen, the configuration of the displayed information being modified in the second mode, such that the information remains visible to the user, despite the sub-area of the screen being obscured by the keyboard.

In the first mode of operation, information may be displayed in a landscape operation, with a portrait orientation being used in the second mode.

The invention, in its various aspects, may comprise features described herein in relation to the other aspects.

### Brief Description of the Drawings

Specific and non-limiting embodiments of the present invention, in its various aspects, will now be described, strictly by way of example only, with reference to the accompanying drawings, of which:
FIGURE 1 is a side view of a display apparatus and keyboard, in one configuration;
FIGURE 2 is a view of the keyboard of Figure 1, from above and one side;
FIGURE 3 shows the display apparatus and keyboard of Figure 1, in a different configuration;
FIGURE 4 is a front view of the components of Figure 1;
FIGURE 5 is a plan view of the display apparatus and keyboard of Figure 3; and
FIGURE 6 illustrates, in very schematic terms, the sequence of events that occur as the display apparatus/keyboard configuration is modified.

### Detailed Description of the Preferred Embodiments and Best Mode of the Invention

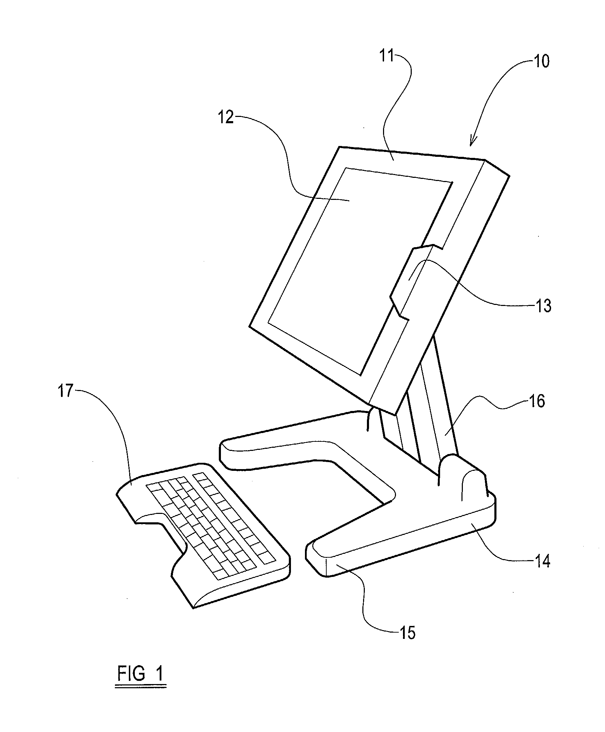

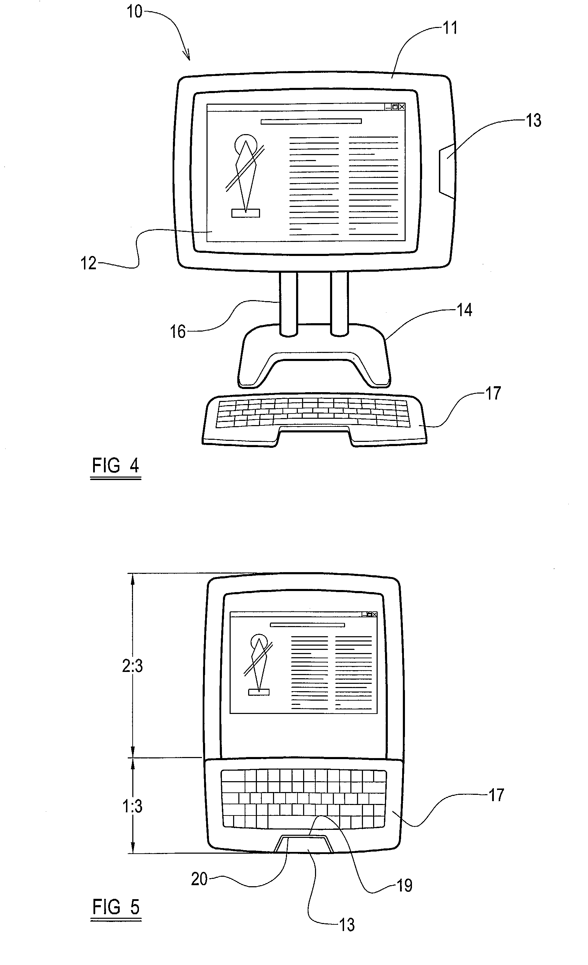

Referring first to Figures 1 and 4, there is shown a portable computer 10 having a housing 11, a screen 12, positioned slightly inwardly of the frame of the housing, and a control panel 13 having a number of generally conventional keys, buttons and the like, by which screen display characteristics may be modified, for example. The computer 10 is supported by a stand 14, having a generally U-shaped foot 15 and a slightly off-vertical support leg 16, having, at its distal end, an attachment device (not shown in detail) by which the computer 10 may be mounted thereon. A keyboard 17 is provided, having a wireless (e.g. infrared) connection so that information may be passed from the keyboard to a co-operating receiver (not shown) of the computer 10.

As shown in Figure 4, the computer 10, having an integral screen 12, acts, in this configuration, in the manner of a monitor, as the data processing elements of the computer are disposed behind the screen 12 and thus away from a user's view. In this configuration, as shown in Figure 4, the computer, serving as a display apparatus, has a horizontal/landscape configuration, meaning that the image displayed on the screen 12, is shown in a landscape orientation, occupying all (or substantially all) of the screen 12. In this arrangement, therefore, the viewable area corresponds exactly (or very closely) with the physical visible area of the screen 12.

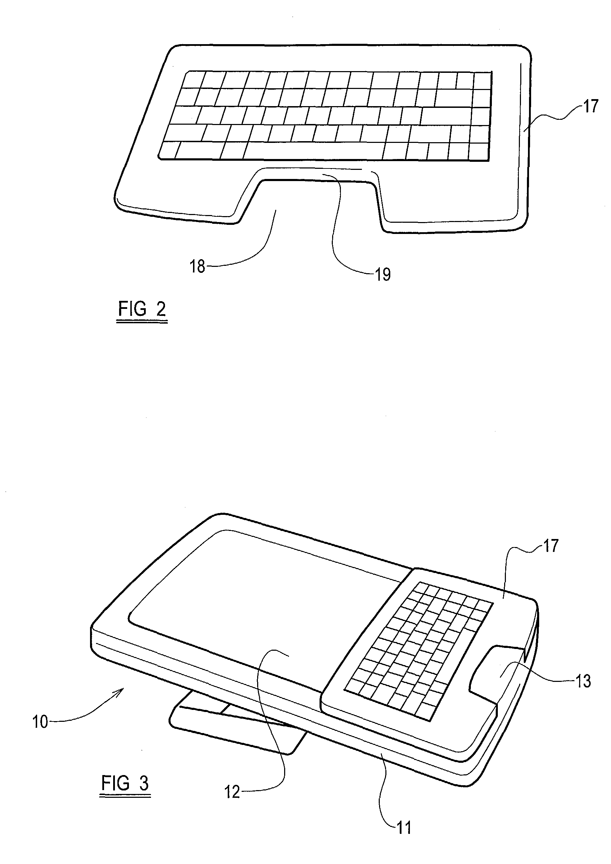

Figure 3 shows the computer 10 and keyboard 17 in a different configuration, in that the keyboard 17 now overlies part of the screen 12. As shown, a recess 18, provided in a lower edge of the keyboard 17, locates around the protruding control panel 13, ensuring that the keyboard 17 is positioned on the screen 12 in a consistent manner, and such that electrical data-passing connectors on an operative edge 19 of the keyboard, and on an operative upper edge 20 of the control panel 13 may mate, to allow the keyboard to be used as a directly-connected data input device. It will be understood, of course, that a direct, physical connection of this type may not in fact be required, and that the recess/control panel location may simply assist in the correct positioning of the keyboard, on the screen 12. In that case, the keyboard 17 and computer 10 may continue to communicate using the wireless connection referred to above.

With the keyboard 17 in position, over part of the screen 12, it will be understood that a portion of the viewable area referred to with reference to Figure 4 is obscured, with the hidden part of the screen thus playing no part in the conveyance of information, to the user.

The computer 10 is thus provided with a detector (not shown) which is operative to detect the presence of the obscuring keyboard, so that appropriate action may be taken, insofar as the display is concerned. The detector may be a physical switch, sensor, contact or the like and may be associated with or integral with a data-passing edge connector provided on the operative edge 20 of the control panel 13.

Upon detection of the presence of the keyboard 17, a display control element (not shown), provided within the computer 10, is operative to modify the viewable area, in the manner hereafter described. The display control element may be a hardware device, but preferably is provided by an appropriate software element, perhaps forming part of the computer's operating system. The nature and location of the software element may be one of many, with it equally being possible to run different types of operating system, without affecting the spirit or scope of the disclosures contained herein.

As shown in Figures 3 and 5, the consequence of the keyboard detection is that the display control element effects a modification to the viewable area and thus to the configuration of the image that is displayed on the restricted area of the screen that is now visible. First of all, the image is rotated by 90°, in a counter-clockwise direction, so that lines of text, for example, remain readily readable by the user, in the new mode of operation of the computer. Secondly, the size and ratio of the image is adjusted to take account of the reduced visible area of the screen and thus of the obscuration of the hitherto larger viewable area, by the keyboard 17. The combined effect of these operations is that the image appearing on the screen 12 is shown in a portrait, rather than landscape mode, thus allowing the computer/keyboard arrangement to be used in a manner akin to a slate-style tablet PC. It will be understood, of course, that whilst the image rotation is likely always to be required, it may be acceptable for the image to remain in landscape mode, with an appropriate software tool being provided to move the landscape image from side-to-side, so that the user is able to "see" all of the information displayed thereon. To effect this, horizontal scroll bars, such as those found in many applications, may be provided.

Reconfiguring the viewable area in the manner described offers benefits not only insofar as the user's visual experience is concerned, but also from the point of view of power consumption and operating efficiency. The fact that there is no need to display any screen-based information in the regions obscured by the keyboard 17 means that power savings may be made, which, in turn, may offer valuable advantages in terms of increased battery life and weight reductions, in the batteries themselves. Even where the computer is mains powered, such as by way of an adapter, the power savings available, by reducing the viewable area on the screen, may be considerable.

In order to increase this benefit, the display control element may also be operative to lessen or cut off the power that is supplied to the image generating elements of the screen 12.

In the case of an LED display, in which each pixel of the display is powered individually, the display control element may be operative to cease the supply of power to the pixels which are disposed behind the obscuring keyboard, meaning that no power is wasted in illuminating pixels that, in practice, cannot be seen. In the case of back-lit displays, such as LCD-type flat panel displays, the display control element may be operative to turn off the back lighting, in a predefined sub-area of the screen, as shown somewhat schematically in Figure 5. Thus, the back-lighting capability of the screen 12 may be divided, perhaps electrically, into two regions, with an upper region, representing about two thirds of the overall screen area and a lower region, corresponding generally to the area of the keyboard, constituting the remaining third. In this way, it will be understood that a significant power saving may be achieved, bearing in mind that the display of screen-based information accounts for a large proportion of a computer's overall power consumption.

Whilst, in the drawings, the keyboard 17 is shown as a physical device, the applicants envisage that the input device might also be provided by a software representation of a computer keyboard, with it only being necessary, under such circumstances, for a template or frame of a keyboard to be detected in the manner described. Thus, in place of the generally conventional keyboard 17 (i.e. one having a plurality of mechanically-operable and moveable plastics keys), it may suffice (see Figure 3, for example) to attach a blank frame to the computer 10, with the detector then being operative to generate, within the frame, a software representation of a physical keyboard, with a touch screen capability then being used to emulate the presence of a physical input device. Clearly, such an approach requires that the screen 12 is provided, over at least part of its area, with a touch screen capability, although it is also envisaged that the frame might be provided, within it, with a transparent membrane, thus allowing the frame and membrane to act as something of a "clip on" touch screen, such as that commercially available from Keytec Inc. of Richardson, Texas, and as described in their US patent number 5062198. The advantage of using a membrane-type keyboard is that the "keys" can be software generated, in a lower region of the screen 12, meaning that different languages, characters and icons can be selected, at the option of the user. It should also be understood, in that regard, that such generated "keyboards" do not strictly constitute part of the viewable area as they do not act to display output information of the types exemplified above. Although not illustrated in the drawings, the computer 10 may be provided, on or in its rear face, with an appropriately configured storage bay, by which the keyboard may be contained and transported, when not in use. Under such circumstances, the portable computer may act as a true tablet-type PC, with data input conveniently being provided by way of a touch screen facility.

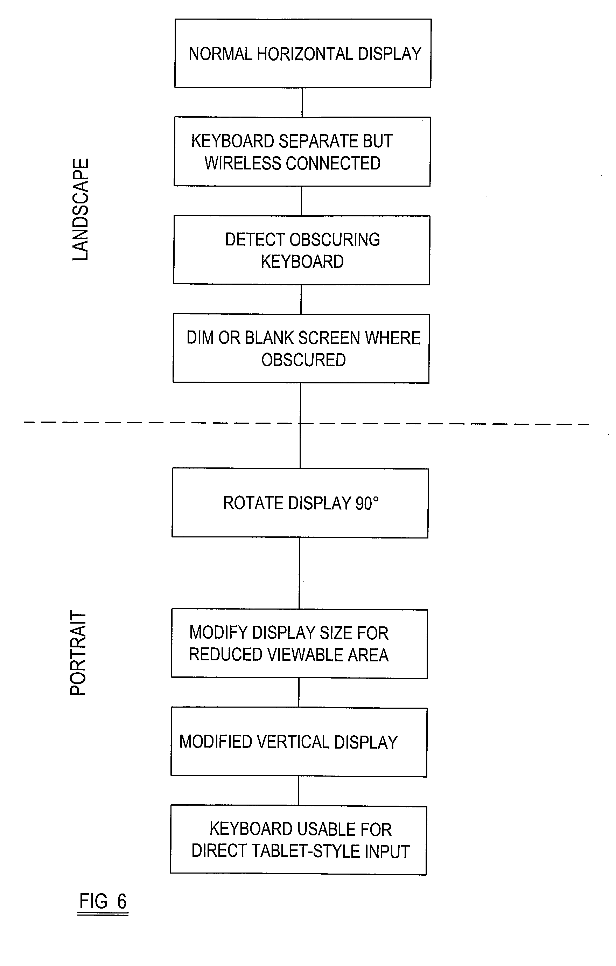

Looking lastly at Figure 6, a schematic flow diagram is shown, showing the various steps involved in switching between landscape and portrait modes, with it being understood, of course, that removal of the keyboard 17 from the screen 12 may invoke a reverse of the process described above, allowing the display to return to a horizontal, landscape orientation.

Lastly, it should be understood that the invention, in its varies aspects, may well find application in data-processing devices other than computing apparatus and computers per se. The term "data-processing devices" is thus intended to encompass a wide range of electronic devices such as televisions, radio tuners, video/DVD recorders, mobile telephones and PDA's - indeed any device with which a display apparatus may conceivably be provided.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A display apparatus for a data-processing device, the display apparatus, in use, having a viewable area, a detector to detect the presence of a device that obscures at least part of the viewable area and a display control element to modify the viewable area when the presence of such a device is detected.

2. A display apparatus according to claim 1 wherein the display control element modifies the viewable area to mitigate the effect of the obscuration.

3. A display apparatus according to claim 1 wherein the display control element modifies the viewable area to compensate for the obscuration.

4. A display apparatus according to any one of the preceding claims wherein the display control element selects an image orientation that is appropriate for use of the detected device.

5. A display apparatus according to any one of the preceding claims having a connector for attachment of the device such that it overlies part of the screen.

6. A display apparatus according to claim 5 wherein the connector allows data, input from the device, to be displayed in the modified viewable area.

7. A display apparatus according to any one of the preceding claims wherein the display apparatus is of the flat-panel type and wherein the display control element is operative to blank the part of the screen that is obscured by the device.

8. A display apparatus according to claim 7 wherein the display apparatus is of the self-emitting type and wherein the display control element is operative to dim or turn off those pixels that are obscured by the device.

9. A display apparatus according to any one of claims 1 to 7 wherein the display apparatus is of the back-lit type and wherein the display control element is operative to dim or turn off the back-lighting in those parts of the screen that are obscured by the device.

10. A display apparatus according to any one of the preceding claims wherein the display apparatus forms part of a portable computer which, when the device is not in use, may function as a slate-style tablet computer.

11. A display apparatus according to any one of the preceding claims wherein the display apparatus has a storage facility for the device, when said device is not in use.

12. A display apparatus according to claim 10 or 11 wherein the portable computer and device are each provided with a wireless connection.

13. A display apparatus according to any one of the preceding claims wherein the device is a computer keyboard.

14. A display apparatus according to any one of the preceding claims wherein the device includes a software representation of a computer keyboard.

15. A portable computer having a display and a detachable device, the viewable area of the display being modified by a display control element when the device is attached the computer in a manner that obscures at least part of the unmodified viewable area.

16. A portable computer according to claim 15 wherein the device is a keyboard and wherein the viewable area is switched from landscape to portrait mode when the keyboard is so attached.

17. A portable computer according to claim 16 wherein the keyboard is located, when not in use, in a storage bay of the computer's housing.

18. A method of reducing the power consumption of a computer display, comprising modifying the viewable area of the display when a user's view of at least part of the display is obscured.

19. A tablet computer having a first mode of operation in which substantially all of the screen area may be used for information display, and a second mode of operation in which a detachable keyboard overlies a sub-area of the screen, the configuration of the displayed information being modified in the second mode, such that the information remains visible to the user, despite the sub-area of the screen being obscured by the keyboard.

20. A tablet computer according to claim 19 wherein, in the first mode of operation, information is displayed in a landscape orientation, with a portrait orientation being used in the second mode.
